(19) Europäisches Patentamt
European Patent Office
Office européen des brevets

(11) **EP 4 682 968 A1**

(12) **EUROPEAN PATENT APPLICATION**
published in accordance with Art. 153(4) EPC

(43) Date of publication:
**21.01.2026 Bulletin 2026/04**

(21) Application number: **24771176.5**

(22) Date of filing: **13.03.2024**

(51) International Patent Classification (IPC):
***H01M 4/13** (2010.01)* ***H01M 10/0562** (2010.01)*
***H01M 4/62** (2006.01)* ***H01M 4/02** (2006.01)*

(52) Cooperative Patent Classification (CPC):
**H01M 4/02; H01M 4/13; H01M 4/62; H01M 10/0562**

(86) International application number:
**PCT/KR2024/003194**

(87) International publication number:
**WO 2024/191177 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023039000**
**12.03.2024 KR 20240034614**

(71) Applicant: **SAMSUNG SDI CO., LTD.**
**Yongin-si, Gyeonggi-do 17084 (KR)**

(72) Inventors:
- **KOIKAWA, Shun**
  **Yokohama-shi, Kanagawa 230--0027 (JP)**
- **SUZUKI, Naoki**
  **Yokohama-shi, Kanagawa 230--0027 (JP)**
- **HOSHIBA, Koji**
  **Yokohama-shi, Kanagawa 230--0027 (JP)**

(74) Representative: **Gulde & Partner**
**Patent- und Rechtsanwaltskanzlei mbB**
**Berliner Freiheit 2**
**10785 Berlin (DE)**

(54) **POSITIVE ELECTRODE FOR ALL-SOLID-STATE RECHARGEABLE BATTERY AND ALL-SOLID-STATE RECHARGEABLE BATTERY INCLUDING SAME**

(57) Provided is an all-solid-state rechargeable battery which can suppress degradation of battery performance due to charging and discharging even when no external pressure is applied or under low restraining pressure.

The positive electrode for an all-solid-state rechargeable battery includes a positive electrode current collector and a positive electrode composite layer stacked on the positive electrode current collector, wherein the positive electrode composite layer includes a positive electrode active material capable of intercalating and deintercalating lithium ions, a sulfide solid electrolyte, and an ionic soft viscous crystal containing a 1,1,2,2,3,3-hexafluoropropane-1,3-disulfonimide anion.

FIG. 2

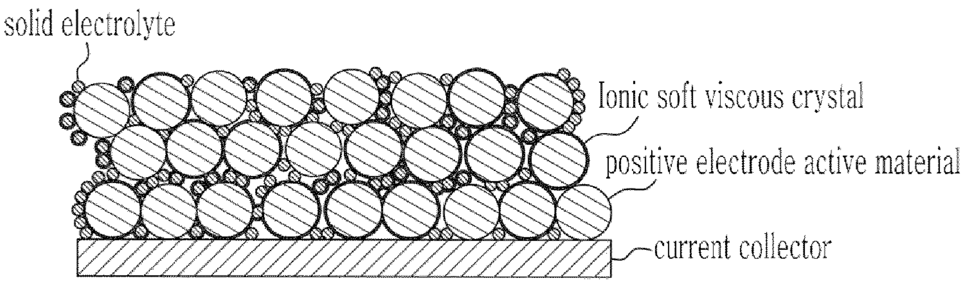


EP 4 682 968 A1

## Description

### [Technical Field]

This disclosure relates to positive electrode for an all-solid-state rechargeable battery and an all-solid-state rechargeable battery including the same.

### [Background Art]

In all-solid-state rechargeable lithium batteries, it is known that the volume of the positive electrode active material changes according to charge and discharge because lithium is intercalated or deintercalated into the positive electrode active material during charging.

As the volume change increases, there is a risk that the positive electrode active material may lose contact with the adjacent solid electrolyte or conductive auxiliary agent, resulting in a decline in battery performance.

Accordingly, in order to suppress the influence of the volume change of the active material during charging and discharging, conventionally, an all-solid-state lithium-ion rechargeable battery is intercalated from the thickness direction using an end plate or the like, and charging and discharging are performed under a state in which a high external pressure is applied.

However, the presence of a pressurizing jig for applying high external pressure to an all-solid-state rechargeable battery is not only disadvantageous in terms of cost, but also becomes a factor that reduces the energy density of the entire battery module including the all-solid-state rechargeable battery and the pressurizing jig.

[Prior Art]

[Patent Document 1] Japanese Patent Laid-Open Publication No. 2021-131979
[Patent Document 2] Japanese Patent Laid-Open Publication No. 2020-198270

### [Disclosure]

[Technical Problem]

The present invention has been made in consideration of the aforementioned problems, and aims to provide an all-solid-state rechargeable battery capable of suppressing deterioration of battery performance even when charging and discharging is performed under a low restraining pressure that can be realized without applying external pressure or with a simple jig. The low restraining pressure may be, for example, a restraining pressure of less than or equal to 0.5 MPa.

[Technical Solution]

As shown in Patent Documents 1 and 2, in order to suppress expansion and contraction of the battery during charging and discharging, it has been considered to include soft viscous crystals in the negative electrode or solid electrolyte of an all-solid-state rechargeable battery, but the effect has not been sufficient.

Accordingly, as a result of repeated examination by the inventor, it has been discovered that the above-mentioned problems can be solved by making the positive electrode includes a predetermined ionic soft viscous crystal, and this has been completed for the first time.

That is, the positive electrode for an all-solid-state rechargeable battery and the all-solid-state rechargeable battery according to the present invention are as follows.

An embodiment provides a positive electrode for an all-solid-state rechargeable battery, including a positive electrode current collector and a positive electrode mixture layer stacked on the positive electrode current collector, wherein the positive electrode mixture layer includes a positive electrode active material capable of intercalating and deintercalating lithium ions, a sulfide solid electrolyte, and an ionic soft viscous crystal including a cyclic disulfonimide-based anion (e.g., 1,1,2,2,3,3-hexafluoropropane-1,3-disulfonimide (CFSI)) anion.

The ionic viscous crystal may include an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a combination thereof as a cation.

The cation may be a cation selected from spiro-type ammonium, pyrrolidinium, piperidinium, tetraalkylammonium, or a combination thereof.

The cyclic disulfonimide-based anion may be represented by Chemical Formula 1.

[Chemical Formula 1]

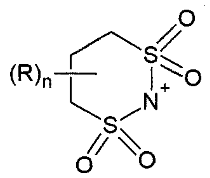

In Chemical Formula 1, R is hydrogen, a fluoro group, or a C1 to C10 fluoroalkyl group, n is an integer of 1 to 6, and at least one of the plurality of Rs is a fluoro group or a C1 to C10 fluoroalkyl group.

The cyclic disulfonimide-based anion may include a 1,1,2,2,3,3-hexafluoropropane-1,3-disulfonimide anion.

An amount of the ionic soft viscous crystal in the positive electrode mixture layer may be greater than or equal to 0.05 wt% and less than or equal to 20 wt% based on 100 wt% of the positive electrode mixture layer.

An amount of the ionic soft viscous crystal in the positive electrode mixture layer may be greater than or equal to 0.1 wt% and less than or equal to 15 wt% based on 100 wt% of the positive electrode mixture layer.

The positive electrode mixture layer may additionally include a conductive auxiliary agent and a binder.

An all-solid-state rechargeable battery includes a positive electrode, a negative electrode, and a solid electrolyte layer between the positive electrode and the negative electrode, wherein the positive electrode may be a positive electrode for an all-solid-state rechargeable battery as described in any one of the aforementioned embodiments.

[Advantageous Effects]

According to the positive electrode for an all-solid-state rechargeable battery or the all-solid-state rechargeable battery configured in this way, because the positive electrode mixture layer includes an ionic viscous crystal including a cyclic disulfonimide-based anion, e.g., 1,1,2,2,3,3-hexafluoropropane-1,3-disulfonimide (CFSI) anion, even when a volume change of the battery occurs due to lithium intercalation, precipitation or elution during charge and discharge, damage to the battery in the positive electrode, negative electrode, solid electrolyte layer and their interface may be suppressed. As a result, even in the case of an all-solid-state rechargeable battery in which volume change occurs as described above, the deterioration of battery performance may be sufficiently suppressed even when no external pressure is applied or when a low external pressure is applied.

**[Description of the Drawings]**

FIG. 1 is a cross-sectional schematic view showing the structure of an all-solid-state rechargeable battery according to an embodiment of the present invention.

FIG. 2 is a cross-sectional schematic view showing the structure of a positive electrode of an all-solid-state rechargeable battery according to an embodiment.

FIGS. 3A and 3B are graphs comparing the battery performance of Example 1 and Comparative Example 1 of the present invention.

**[Best Mode]**

Hereinafter, specific embodiments are described in detail with reference to drawings so that those with ordinary knowledge in this technical field can easily implement them. However, this disclosure may be embodied in many different forms and is not construed as limited to the example embodiments set forth herein.

On the other hand, in the present specification and drawings, the same reference numerals are assigned to components having substantially the same functional configuration, and redundant descriptions are omitted.

The terminology used herein is used to describe embodiments only, and is not intended to limit the present invention. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

<1. Basic Configuration of All-solid-state Rechargeable Battery According to the Present Embodiment >

As shown in FIG. 1, the all-solid-state rechargeable battery 1 according to the present embodiment includes a positive electrode 10, a negative electrode 20, a solid electrolyte layer 30, and an exterior body 40 accommodating them therein.

(1-1. Positive Electrode)

The positive electrode 10 includes a positive electrode current collector 11 and a positive electrode mixture layer 12. Examples of the positive electrode current collector 11 may include a plate or thin body made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 11 may be omitted.

The positive electrode mixture layer 12 may include a positive electrode active material and a solid electrolyte. And, the solid electrolyte included in the positive electrode is a sulfide solid electrolyte of the same type or a different type as that described in the claims of the solid electrolyte layer 30.

The positive electrode active material may be any positive electrode active material capable of reversibly intercalating and deintercalating lithium ions.

For example, the positive electrode active material may include a lithium salt such as lithium cobalt oxide (hereinafter referred to as "LCO"), lithium nickel oxide, lithium nickel cobalt oxide, and lithium nickel cobalt aluminate (hereinafter referred to as "NCA"), lithium nickel cobalt manganate (hereinafter referred to as "NCM"), lithium manganate, lithium iron phosphate, nickel sulfide, copper sulfide, lithium sulfide, sulfur, iron oxide, vanadium oxide or the like. These positive electrode active materials may be used alone, respectively, and may be used in combination of two or more.

In addition, the positive electrode active material is preferably formed by including a lithium salt of a transition metal oxide having a layered rock salt structure among the aforementioned lithium salts. Here, the "layered rock salt structure" is a structure in which oxygen atomic layers and metal atomic layers are alternately arranged in the <111> direction of the cubic rock salt structure, and as a result, each atomic layer forms a two-dimensional plane. In addition, "cubic rock salt structure" refers to a sodium chloride type structure, which is one type of crystal structure, and specifically, a structure in which the face-centered cubic lattice formed by each of the cations and anions is arranged with a shift of only 1/2 of the corners of the unit lattice from each other.

Examples of the lithium salt of the transition metal oxide having such a layered rock salt structure may include lithium salts of ternary transition metal oxides such as $LiNi_xCo_yAl_zO_2$ (NCA) or $LiNi_xCo_yMn_zO_2$ (NCM) ($0<x<1$, $0<y<1$, $0<z<1$, and $x+y+z=1$).

When the positive electrode active material includes a lithium salt of a ternary transition metal oxide having the aforementioned layered rock salt structure, the energy density and thermal stability of the all-solid-state rechargeable battery 1 may be improved.

The positive electrode active material may be covered with a coating layer. Here, the coating layer of this embodiment may be any as long as it is a well-known coating layer of the positive electrode active material of an all-solid-state rechargeable battery. Examples of the coating layer may include $Li_2O-ZrO_2$, and the like.

In addition, when the positive electrode active material is formed from a lithium salt of a ternary transition metal oxide such as NCA or NCM, and nickel (Ni) is included as the positive electrode active material, capacity density of the all-solid-state rechargeable battery 1 is increased, and metal elution from the positive electrode active material in a charged state may be reduced. Accordingly, the all-solid-state rechargeable battery 1 according to the present embodiment may improve long-term reliability and cycle characteristics in a charged state.

Herein, the positive electrode active material may have a shape of a particle, such as a regular spherical shape and an ellipsoidal shape. In addition, the particle diameter of the positive electrode active material is not particularly limited, and may be within a range applicable to the positive electrode active material of a conventional all-solid-state rechargeable battery. Meanwhile, an amount of the positive electrode active material in the positive electrode 10 is also not particularly limited, as long as it is within a range applicable to the positive electrode 10 of a conventional all-solid rechargeable battery.

Further, in the positive electrode 10, in addition to the aforementioned positive electrode active material and solid

electrolyte, for example, additives such as a conductive auxiliary agent, a binder, a filler, a dispersant, or an ion conductive auxiliary agent may be suitably blended.

Examples of the conductive auxiliary agent that may be blended in the positive electrode 10 may include graphite, carbon black, acetylene black, Ketjen black, a carbon fiber, and a metal powder. In addition, the binder that may be blended in the positive electrode 10 may include, for example, a styrene butadiene rubber (SBR), polytetrafluoroethylene, polyvinylidene fluoride, polyethylene, and the like. In addition, as the filler, the dispersant, the ion conductive auxiliary agent, etc. which may be blended in the positive electrode 10, well-known materials which can generally be used for the electrode of an all-solid-state rechargeable battery may be used.

(1-2. Negative Electrode)

The negative electrode 20 may include a negative electrode current collector 21 and a negative electrode mixture layer 22 on the negative electrode current collector 21. The negative electrode current collector 21 may be desirably made of a material that does not react with lithium, that is, neither an alloy nor a compound is formed. Examples of the material constituting the negative electrode current collector 21 may include copper (Cu), stainless steel, titanium (Ti), iron (Fe), cobalt (Co), and nickel (Ni).

The negative electrode mixture layer 22 includes a negative electrode active material, a carbon material, and a binder.

The negative electrode active material may be, for example, an alloy-forming element, which is an element that forms an alloy or compound with lithium through an electrochemical reaction during charging.

The alloy-forming element may be any one or more types selected from gold, platinum, palladium, silicon, silver, aluminum, bismuth, tin, and zinc.

When one or more of gold, platinum, palladium, silicon, silver, aluminum, bismuth, tin, and zinc are used as the alloy-forming element, it is desirable that these negative electrode active materials are in the form of particles, for example, and that the particle size is less than or equal to 4 $\mu$m, and more desirably less than or equal to 300 nm. In this case, the characteristics of the all-solid-state rechargeable battery 1 are further improved. Herein, the particle size of the negative electrode active material may be, for example, a median diameter (so-called $D_{50}$) measured using a laser particle size distribution meter.

Examples of the carbon material include amorphous carbon such as carbon black and graphene. Examples of carbon black may include acetylene black, furnace black, and Ketjen black.

In addition to those described above, the negative electrode mixture layer 22 may also include appropriate additives used in conventional all-solid-state rechargeable batteries, such as a filler, a dispersant, an ion-conducting agent, and a solid electrolyte.

(1-3. Solid Electrolyte Layer)

The solid electrolyte layer 30 is formed between the positive electrode 10 and the negative electrode 20 and includes a solid electrolyte.

The solid electrolyte is, for example, in powder form and is composed of, for example, a sulfide-based solid electrolyte material.

The sulfide-based solid electrolyte material may be, for example, $Li_2S$-$P_2S_5$, $Li_2S$-$P_2S_5$-LiX (X is a halogen element, for example, I, Br, or Cl), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z is any one of Ge, Zn or Ga), $Li_2S$-$GeS_2$, $Li_2S$-$SiS_2$-$Li_3PO_4$, $Li_2S$-$SiS_2$-$Li_pMO_q$ (p and q are positive numbers and M is P, (any of Si, Ge, B, Al, Ga or In). Here, the sulfide-based solid electrolyte material is prepared by processing a starting material (e.g., $Li_2S$, $P_2S_5$, etc.) using a melting rapid cooling method or a mechanical milling method. Additionally, further heat treatment may be performed after these treatments. The solid electrolyte may be amorphous, crystalline, or a mixture thereof.

In addition, as a solid electrolyte, it is desirable to use a material including at least one element selected from sulfur, silicon, phosphorus, and boron among the above-mentioned sulfide-based solid electrolyte materials. Accordingly, the lithium conductivity of the solid electrolyte layer 30 is improved, and the battery characteristics of the all-solid-state rechargeable battery 1 are improved. In particular, it is preferable to use a solid electrolyte including at least sulfur (S), phosphorus (P) and lithium (Li) as constituent elements, and it is more desirable to use a solid electrolyte including $Li_2S$-$P_2S_5$.

Here, when using a sulfide-based solid electrolyte material including $Li_2S$-$P_2S_5$ to form a solid electrolyte, the mixing molar ratio of $Li_2S$ and $P_2S_5$ may be selected in the range of, for example, $Li_2S$:$P_2S_5$=50:50 to 90:10.

The solid electrolyte layer 30 may further include a binder, and examples of the binder include styrene butadiene rubber (SBR), polytetrafluoroethylene, polyvinylidene fluoride, polyethylene, and the like. The binder in the solid electrolyte layer 30 may be the same as or different from the binder in the positive electrode mixture layer 12 and the

negative electrode mixture layer 22.

(1-4. Relationship between Charge Capacity of Positive and Negative Electrodes)

The all-solid-state rechargeable battery 1 according to the present embodiment is configured such that the ratio of the charge capacity of the positive electrode mixture layer 12 to the charge capacity of the negative electrode mixture layer 22, i.e., the capacity ratio, satisfies the condition of Equation 1.
[Equation 1]

$$0.01<b/a<0.5 \qquad (1)$$

In Equation 1
a is the charge capacity (mAh) of the positive electrode mixture layer 12 and b is the charge capacity (mAh) of the negative electrode mixture layer 22.
Here, the charge capacity of the positive electrode mixture layer 12 is obtained by multiplying the charge capacity density (mAh/g) of the positive electrode active material by the weight of the positive electrode active material in the positive electrode mixture layer 12. When multiple types of positive electrode active materials are used, the value of charge capacity density × weight is calculated for each positive electrode active material, and the sum of these values is used as the charge capacity of the positive electrode mixture layer 12. The charge capacity of the negative electrode mixture layer 22 is also calculated in the same way. That is, the charge capacity of the negative electrode mixture layer 22 is obtained by multiplying the charge capacity density (mAh/g) of the negative electrode active material by the weight of the negative electrode active material in the negative electrode mixture layer 22. When multiple types of negative electrode active materials are used, the value of charge capacity density × weight is calculated for each negative electrode active material, and the sum of these values is used as the capacity of the negative electrode mixture layer 22. Here, the charge capacity density of the positive and negative electrode active materials is an estimated capacity using an all-solid-state half-cell using lithium metal as the counter electrode. In practice, the charge capacity of the positive electrode mixture layer 12 and the negative electrode mixture layer 22 is directly measured by measurement using an all-solid-state half-cell.
As specific methods for directly measuring the charge capacity, the following methods may be described as examples. First, the charge capacity of the positive electrode mixture layer 12 is measured by manufacturing a test cell using the positive electrode mixture layer 12 as a working electrode and Li as a counter electrode, and performing CC-CV charging from OCV (open circuit voltage) to the upper limit charge voltage. The upper limit charge voltage is determined by the standard of JIS C 8712:2015, and refers to a voltage obtained by applying the provisions of A.3.2.3 (safety requirements when applying different upper limit charge voltages) of JIS C 8712:2015 to lithium cobaltate type positive electrodes and 4.25 V for other type positive electrodes. Regarding the charge capacity of the negative electrode mixture layer 22, a test cell is manufactured using the negative electrode mixture layer 22 as the working electrode and Li as the counter electrode, and the charge capacity is measured by performing CC-CV charging from OCV (open circuit voltage) to 0.01 V.
For the test cell described above, it may be manufactured, for example, in the following manner. The positive electrode mixture layer 12 or negative electrode mixture layer 22 whose charge capacity is to be measured is punched into a circular shape with a diameter of 13 mm. 200 mg of the same solid electrolyte powder used in the all-solid-state rechargeable battery 1 is solidified at 40 MPa and made into a pellet shape with a diameter of 13 mm and a thickness of approximately 1 mm. The pellets are placed inside a can with an inner diameter of 13 mm, a positive electrode mixture layer 12 or negative electrode mixture layer 22 with a circular plate shape is placed from one side, and a lithium foil with a diameter of 13 mm and a thickness of 0.03 mm is placed from the opposite side. Additionally, one stainless steel plate is inserted from each side, and the entire body is pressurized at 300 MPa for 1 minute in the axial direction to integrate the contents. The integrated contents are taken out of the container and sealed in a case so that a pressure of 22 MPa is always applied to make a test cell. The charge capacity of the positive electrode mixture layer 12 can be measured by, for example, charging a test cell manufactured as described above with CC at a current density of 0.1 mA and then charging with CV up to 0.02 mA.
By dividing this charge capacity by the weight of each active material, the charge capacity density is calculated. The initial charge capacity of the positive electrode mixture layer 12 and the negative electrode mixture layer 22 may be the initial charge capacity measured during the first cycle of charging. In the examples described below, this value was used.
In this way, the charge capacity of the positive electrode mixture layer 12 becomes excessive with respect to the charge capacity of the negative electrode mixture layer 22. As described below, in this embodiment, the all-solid-state rechargeable battery 1 is charged exceeding the charge capacity of the negative electrode mixture layer 22. That is, the negative electrode mixture layer 22 is overcharged. At the beginning of charging, lithium is intercalated into the negative electrode mixture layer 22. That is, the negative electrode active material forms an alloy with lithium ions that have moved

from the positive electrode 10. When further charging is performed beyond the capacity of the negative electrode mixture layer 22, as shown in FIG. 2, lithium is precipitated on the back of the negative electrode mixture layer 22, that is, between the negative electrode current collector 21 and the negative electrode mixture layer 22, and a lithium precipitation layer 23 is formed by this lithium. The lithium precipitation layer 23 is mainly composed of lithium (mainly metallic lithium), although it also contains trace amounts of elements other than lithium.

This phenomenon is caused by containing a specific substance as the negative electrode active material, namely an alloy-forming element that forms an alloy or compound with lithium. During discharge, lithium in the negative electrode mixture layer 22 and lithium precipitation layer 23 is ionized and moves toward the positive electrode 10. Therefore, in the all-solid-state rechargeable battery 1 according to the present embodiment, precipitated lithium may be used as a negative electrode active material. In addition, because the negative electrode mixture layer 22 covers the lithium precipitation layer 23, it functions as a protective layer for the lithium precipitation layer 23 and may suppress the precipitation and growth of dendrites. Accordingly, short circuit and capacity reduction of the all-solid-state rechargeable battery 1 are suppressed, and further, the characteristics of the all-solid-state rechargeable battery 1 are improved.

Here, the capacity ratio is greater than 0.01. When the capacity ratio is less than 0.01, the characteristics of the all-solid-state rechargeable battery 1 may be deteriorated. As a reason for this, one example may be that the negative electrode mixture layer 22 does not function sufficiently as a protective layer. For example, when the thickness of the negative electrode mixture layer 22 is very thin, the capacity ratio may be less than or equal to 0.01. In this case, there is a possibility that the negative electrode mixture layer 22 may collapse due to repeated charging and discharging, causing dendrites to precipitate and grow. As a result, the characteristics of the all-solid-state rechargeable battery 1 are deteriorated. In Patent Document 1, it is assumed that the interfacial layer or carbon layer is too thin, and thus characteristics of the all-solid-state rechargeable battery are not sufficiently improved. Additionally, it is desirable that the capacity ratio be less than 0.5. This is because when the above capacity ratio is greater than or equal to 0.5, it is believed that the amount of lithium precipitated in the negative electrode decreases and the battery capacity decreases. For the same reason, it is considered more desirable that the capacity ratio be less than 0.25. In addition, the output characteristics of the battery may be further improved by having the capacity ratio of less than 0.25.

A thickness of the negative electrode mixture layer 22 is not particularly limited as long as it satisfies the requirements of Equation 1, but is desirably greater than or equal to 1 $\mu$m and less than or equal to 20 $\mu$m, more desirably greater than or equal to 1 $\mu$m and less than or equal to 10 $\mu$m. If the thickness of the negative electrode mixture layer 22 is less than 1 $\mu$m, there is a possibility that characteristics of the all-solid-state rechargeable battery 1 may not be sufficiently improved. If the thickness of the negative electrode mixture layer 22 exceeds 20 $\mu$m, the resistance of the negative electrode mixture layer 22 increases, and as a result, there is a possibility that characteristics of the all-solid-state rechargeable battery 1 may not be sufficiently improved.

The thickness of the aforementioned negative electrode mixture layer 22 may be estimated, for example, by observing the average thickness of the cross-section after assembling and press-molding the all-solid-state rechargeable battery 1 using a scanning electron microscope (SEM).

<2. Characteristic Configuration of All-solid-state Rechargeable Battery Cell according to the Present Embodiment>

In the present embodiment, the positive electrode 10 further includes the ionic soft viscous crystal in addition to the aforementioned components. Specifically, an example may be one in which the positive electrode mixture layer includes the ionic soft viscous crystal.

The soft viscous crystal is an intermediate state between a solid crystal and a liquid, and refers to a state in which the three-dimensional positions of the constituent particles are regular, but the orientation of the particles is irregular.

The soft viscous crystal in this embodiment is ionic and contains cations and anions.

The cation may be, for example, one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and mixtures thereof.

Among them, it is desirable to use the spiro-type ammonium-based, tetraalkylammonium-based, pyrrolidinium-based, and pyridinium-based cation. Here, alkyl may be an alkyl having 1 to 20 carbon atoms, for example, an alkyl having 1 to 10 carbon atoms.

Specific examples may include 5-azoniaspiro[4,4]nonane (SBP), N-ethyl-N-methyl pyrrolidinium (P12), tetramethylammonium (TMA), N,N-dimethyl-piperidinium (P11), triethylmethylammonium (TEMA), tetrapropylammonium (TPA), and ethyltrimethylammonium (ETMA).

In the present embodiment, the anion includes a cyclic disulfonimide-based anion. The cyclic disulfonimide-based anion may be represented by Chemical Formula 1.

[Chemical Formula 1]

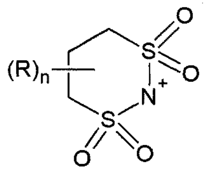

In Chemical Formula 1, R is hydrogen, a fluoro group, or a C1 to C10 fluoroalkyl group, n is an integer of 1 to 6, and at least one of the plurality of Rs is a fluoro group or a C1 to C10 fluoroalkyl group.

For example, the cyclic disulfonimide-based anion may be a 1,1,2,2,3,3-hexafluoropropane-1,3-disulfonimide anion (hereinafter also referred to as CFSI).

As described above, the ionic soft viscous crystal containing a cation and an anion, for example, when it contains 5-azoniaspiro[4,4]nonane as a cation and 1,1,2,2,3,3-hexafluoropropane-1,3-disulfonimide anion as an anion, may be expressed as 5-azoniaspiro[4,4]nonane 1,1,2,2,3,3-hexafluoropropane-1,3-disulfonimide anion. As for the ionic soft viscous crystal according to the present embodiment, because there are multiple candidate substances for the cation as described above, various types of ionic soft viscous crystals may be used by replacing the cation with a different type and changing the combination of cation and anion.

An amount of the ionic soft viscous crystal in the positive electrode mixture layer 12 (when the total positive electrode mixture layer 12 is 100 wt%) is desirably greater than or equal to 0.05 wt% and less than or equal to 20 wt%, more desirably greater than or equal to 0.1 wt% and less than or equal to 15 wt%, and even more desirably greater than or equal to 0.5 wt% and less than or equal to 10 wt%.

The ionic viscous crystal may further contain lithium salt.

Any lithium salt that is used as a lithium salt in the above technical field may be used. The lithium salt is, for example, one of $LiPF_6$, $LiBF_4$, $LiSbF_6$, $LiA_sF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are natural numbers), LiCl, LiI, or a mixture thereof.

A concentration of lithium salt included in the ionic viscous crystal is desirably 0.1 M to 5 M.

<3. Method of Manufacturing All-solid-state Rechargeable Battery According to the Present Embodiment>

Next, a method for manufacturing an all-solid-state rechargeable battery 1 according to the present embodiment will be described. The all-solid-state rechargeable battery 1 according to the present embodiment may be manufactured by manufacturing a positive electrode 10, a negative electrode 20, and a solid electrolyte layer 30, respectively, and then stacking each of the above layers.

(3-1. Manufacturing Process of Positive Electrode)

First, the materials (positive electrode active material, solid electrolyte, binder, and the like) constituting the positive electrode mixture layer 12 are mixed and processed into a sheet shape, and the sheet is impregnated with the ionic soft viscous crystal to form a positive electrode mixture sheet.

The positive electrode mixture sheet obtained in this manner is cut into an appropriate shape and stacked as a positive electrode mixture layer material on a positive electrode current collector, and the obtained stack is pressed (for example, by pressing using hydrostatic pressure), thereby manufacturing a positive electrode 10 including a positive electrode current collector and a positive electrode mixture layer.

(3-2. Manufacturing Process of Negative Electrode)

First, a slurry is prepared by adding the negative electrode mixture layer material (negative electrode active material, non-alloy forming element, binder, etc.) constituting the negative electrode mixture layer 22 to a polar solvent or a non-polar solvent. Subsequently, the obtained slurry is coated on the negative electrode current collector 21 and dried. Next, the obtained stack is pressed (for example, by pressing using hydrostatic pressure) to produce a negative electrode 20. The pressurization process may be omitted. Meanwhile, the negative electrode 20 may be manufactured by forming a negative electrode mixture layer 22 separately and then stacking and pressurizing it on the negative electrode current collector 21.

(3-3. Manufacturing Process of Solid Electrolyte Layer)

The solid electrolyte layer 30 may be manufactured, for example, by the following order or process.

First, the starting materials are treated by a melt quenching method or a mechanical milling method.

For example, when the melt quenching method is used, the starting materials (for example, $Li_2S$, $P_2S_5$, and the like) are mixed in each predetermined amount and pelletized and then, reacted at a predetermined reaction temperature under vacuum and quenched, preparing a sulfide-based solid electrolyte material. Meanwhile, the reaction temperature of the $Li_2S$ and $P_2S_5$ mixture may be desirably 400 °C to 1000 °C and more desirably, 800 °C to 900 °C. In addition, reaction time may be desirably about 0.1 hour to about 12 hours and more desirably, about 1 hour to about 12 hours. Furthermore, a quenching temperature of the reactant may be generally at less than or equal to 10 °C and desirably less than or equal to 0 °C, and a quenching rate may be generally 1 °C/sec to 10000 °C/sec and desirably, 1 °C/sec to 1000 °C/sec.

In addition, when the mechanical milling method is used, the starting materials (for example, $Li_2S$, $P_2S_5$, and the like) are stirred and reacted by using a ball mill and the like, preparing the sulfide-based solid electrolyte material. Meanwhile, the mechanical milling method is not particularly limited with respect to a stirring speed and stirring time, but as the stirring speed is fast, the sulfide-based solid electrolyte material may be fast produced, and as the stirring becomes longer, a conversion rate of the raw material to the sulfide-based solid electrolyte material may be increased.

Thereafter, the mixed raw material obtained in the melt quenching method or the mechanical milling method is heat-treated at a predetermined temperature and pulverized, preparing a particle-shaped solid electrolyte. When the solid electrolyte has a glass transition point, it may be changed from amorphous to crystalline through the heat treatment.

Subsequently, the solid electrolyte obtained in the aforementioned method may be formed into the solid electrolyte layer 30 in a known film-forming method, for example, an aerosol deposition method, a cold spray method, a sputtering method, and the like. Meanwhile, the solid electrolyte layer 30 may be produced by pressing solid electrolyte particles group. In addition, the solid electrolyte layer 30 may be formed by mixing the solid electrolyte, a solvent, and a binder and then, coating and drying the mixture.

(3-4. Assembly Process of All-solid-state Rechargeable Battery)

An all-solid-state rechargeable battery 1 according to the present embodiment may be manufactured by stacking the positive electrode 10, negative electrode 20, and solid electrolyte layer 30 manufactured by the above-described method so that the solid electrolyte layer 30 is sandwiched between the positive electrode 10 and negative electrode 20, and applying pressure (for example, applying pressure using hydrostatic pressure).

<4. Charging Method of All-solid-state Rechargeable Battery According to the Present Embodiment >

Next, a charging method of an all-solid-state rechargeable battery 1 is described. In this embodiment, as described above, the all-solid-state rechargeable battery 1 is charged exceeding the charge capacity of the negative electrode mixture layer 22. That is, the negative electrode mixture layer 22 is overcharged. At the beginning of charging, lithium is intercalated into the negative electrode mixture layer 22. When charging is performed exceeding the charge capacity of the negative electrode mixture layer 22, for example, as shown in FIG. 1, lithium is precipitated on the back of the negative electrode mixture layer 22, that is, between the negative electrode current collector 21 and the negative electrode mixture layer 22, and a lithium precipitation layer 23 that did not exist during manufacturing is formed by this lithium. During discharge, lithium in the negative electrode mixture layer 22 and lithium precipitation layer 23 is ionized and moves toward the positive electrode 10.

And, it is desirable that the charging amount be a value between 2 times and 100 times the charge capacity of the negative electrode mixture layer 22, more desirably between 4 times and 100 times.

The thickness of the lithium precipitation layer 23 deposited in the negative electrode during charging is desirably greater than or equal to 10 μm, more desirably greater than or equal to 30 μm, and desirably within the range of less than or equal to 60 μm, which is the upper limit feasible as an all-solid-state rechargeable battery. Meanwhile, the thickness of this lithium precipitation layer 23 may be measured by observing the average thickness of the cross-section after charging the all-solid-state rechargeable battery 1 using a scanning electron microscope (SEM).

<5. Effects of the Present Embodiment>

According to the positive electrode for an all-solid-state rechargeable battery or the all-solid-state rechargeable battery according to the present embodiment, a positive electrode mixture layer contains ionic soft viscous crystals with a cyclic disulfonimide-based anion (e.g., 1,1,2,2,3,3-hexafluoropropane-1,3-disulfoneimide anion, hereinafter, referred to as CFSI) as an anion, and even when of the battery has large volume changes, such as when lithium is precipitated by overcharging beyond negative electrode capacity as described above, because deterioration of battery performance may

be sufficiently suppressed, the battery may be charged and discharged without problems by applying not an external pressure or a sufficiently low external pressure.

<6. Another Embodiment of the Present Invention>

As mentioned above, although this invention was described in detail regarding embodiments, referring an accompanying drawing, the present disclosure is not limited thereto. Those of ordinary skill in the art to which the present invention pertains may understand that various examples of changes or modifications may be made within the scope of the technical idea described in the claims and so these may also be within the technical scope of the present invention.

**[Mode for Invention]**

**Examples**

Examples of the all-solid-state rechargeable battery according to the present disclosure will be described in more detail below, but the present disclosure is not limited thereto.

**Examples 1 to 12 and Comparative Examples 1 and 2**

<Preparation of Ionic Soft Viscous Crystal>

An ionic soft viscous crystal, 5-azoniaspiro[4.4]nonane 1.1.2.2.3.3-hexafluoropropane-1.3-disulfonimide (SBPCFSI), was synthesized as follows.

10 g of the 5-azoniaspiro[4.4]nonane chloride (SBPCl) was dissolved in 100 mL of ultrapure water. Subsequently, after dissolving 18.5 g of lithium 1.1.2.2.3.3-hexafluoropropane-1.3-disulfonimide (LiCFSI) in 100 mL of ultrapure water, the SBPCl aqueous solution was added dropwise to this solution. The obtained white solid was recovered by filtration, washed with distilled water and the like, and vacuum-dried at 120 °C for 12 hours to obtain the target ionic soft viscous crystal.

Other ionic soft viscous crystals were synthesized in the same order as above.

<Manufacturing of Positive Electrode>

$LiNi_{0.8}Co_{0.15}Mn_{0.05}O_2$ (NCM) as a positive electrode active material, $Li_6PS_5Cl$ as a solid electrolyte, carbon nanotube (CNT) as a conductive agent, and a TEFLON (tetrafluoroethylene) binder as a binder were mixed in a weight ratio of 90:9.6:0.15:0.25 (=positive electrode active material: solid electrolyte:CNT:TEFLON (tetrafluoroethylene) binder) and then, molded into a sheet shape with about 2 cm $\times$2 cm, which was used as a positive electrode mixture.

Subsequently, the ionic soft viscous crystal SBPCFSI was dissolved at a concentration of 2 wt% in dichloromethane. The molded positive electrode sheet was immersed in the solution and impregnated thereinto by vacuum suction to -0.05 MPa. The positive electrode sheet was taken from the solution and then, dried to obtain the positive electrode sheet impregnated with the ionic soft viscous crystals. The positive electrode mixtures of Examples 1 to 12 and Comparative Examples 1 and 2 were respectively prepared to include each content of the ionic soft viscous crystals as shown in Table 1 or 2 after the drying and then, pressed onto an 18 μm-thick aluminum film as a positive electrode current collector, manufacturing positive electrodes. On the other hand, the content of the ionic soft viscous crystals in the positive electrode mixtures was controlled by adjusting a concentration of the ionic soft viscous crystals in the solution in which the positive electrode sheets were immersed, specifically, it is known that the concentration of the ionic soft viscous crystals in the solution may be set to twice a target content. For example, when a positive electrode sheet is immersed in a solution containing 2 wt% of the ionic soft viscous crystals, a finally obtained positive electrode mixture may contain about 1 wt% of the ionic soft viscous crystals.

<Manufacturing of All-solid-state Rechargeable Battery Cell>

12 g of carbon black and 4 g of silver particles were placed in a container and then, stirred, while little by little adding an NMP solution including 8 wt% of a binder (Kureha Corp.), wherein the amount of the binder was set to be 7 wt% of a solid content, thereto, thereby preparing a slurry. This slurry was coated on a 10 μm-thick stainless steel film with a blade coater and then, dried at 80 °C for about 20 minutes in the air and vacuum-dried at 100 °C for about 12 hours, manufacturing a negative electrode.

Subsequently, a solid electrolyte sheet was manufactured in the following method. To the $Li_6PS_5Cl$ solid electrolyte, 1 wt% of a binder was added and then, stirred, while adding xylene and isobutyl isobutyrate thereto, thereby

preparing a slurry. This slurry was coated on a PET film with a blade coater and then, dried at 40 °C in the air and vacuum-dried at 40 °C for 12 hours.

The solid electrolyte sheet manufactured in this way was overlapped, so that the solid electrolyte surface and the negative electrode surface were combined, and then, isotropically pressurized at 50 MPa and transferred on the negative electrode by peeling off the PET film. Subsequently, a positive electrode was superimposed on the obtained negative electrode/solid electrolyte integral sheet and then, vacuum-sealed in a laminate film. Each portion of the positive electrode and the negative electrode was designed to protrude from the laminate film so as not to break the vacuum of a battery cell and respectively used as positive and negative electrode terminals.

Finally, isotropic pressurization at 490 MPa was performed to improve battery characteristics, obtaining an all-solid-state rechargeable battery cell.

< Evaluation of All-Solid-State Rechargeable Battery Cell>

The all-solid-state lithium battery cell manufactured as described above was evaluated with respect to charge and discharge characteristics at a restraining pressure of 0.3 MPa or 0 MPa under the following conditions.

The measurement was performed by placing the all-solid-state lithium battery cell in a thermostat bath at 45 °C. The all-solid-state battery cell was inserted between two rigid stainless steel plates, and the stainless steel plates were fastened at four corners with screws to apply a predetermined pressure thereto.

The cell was charged to a battery voltage of 4.25 V at a constant current of 4.6 mA/cm$^2$ and to a current of 1.4 mA/cm$^2$ at the constant voltage of 4.25 V. Then, the cell was discharged to a battery voltage of 2.5 V at the constant current of 4.6 mA/cm$^2$. This charge/discharge was 50 times repeated to measure a capacity retention rate (cycle-life) and average coulomb efficiency (1 C discharge characteristics), which are shown in Tables 1 and 2. The average coulomb efficiency in Table 2 was expressed as a relative value based on 100% of Comparative Example 1. In addition, FIGS. 3A and 3B are graphs respectively showing the average coulomb efficiency (1C discharge characteristics) and the capacity retention rates of Example 1 and Comparative Example 1.

(Table 1)

| | Ionic soft viscous crystal | Amount (wt%) | Restraining pressure (MPa) | 1 C discharge characteristics (mAh/g) | Cycle-life (50$^{th}$ cycle, %) |
|---|---|---|---|---|---|
| Example 1 | SBPCFSI | 0.5 | 0.3 | 153.9 | 93.1 |
| Example 2 | SBPCFSI | 1.0 | 0.3 | 167.3 | 92.7 |
| Example 3 | SBPCFSI | 1.5 | 0.3 | 172.8 | 92.1 |
| Example 4 | SBPCFSI | 2.0 | 0.3 | 172.5 | 92.1 |
| Example 5 | P12CFSI | 1.0 | 0.3 | 163.5 | 91.6 |
| Example 6 | TEMACFSI | 1.0 | 0.3 | 161.3 | 87.2 |
| Example 7 | TPACFSI | 1.0 | 0.3 | 176.3 | 91.5 |
| Example 8 | TMACFSI | 1.0 | 0.3 | 174.4 | 92.0 |
| Example 9 | ETMACFSI | 1.0 | 0.3 | 172.1 | 89.4 |
| Example 10 | P11CFSI | 1.0 | 0.3 | 171.6 | 88.2 |
| Comparative Example 1 | - | - | 0.3 | 88.3 | 79.7 |

(Table 2)

| | Ionic soft viscous crystal | Amount (wt%) | Restraining pressure (MPa) | 1 C discharge characteristics (%) |
|---|---|---|---|---|
| Example 2 | SBPCFSI | 1.0 | 0 | 163 |
| Example 4 | SBPCFSI | 2.0 | 0 | 181 |
| Example 11 | SBPCFSI | 10.0 | 0 | 198 |
| Example 12 | SBPCFSI | 15.0 | 0 | 188 |
| Comparative Example 1 | - | - | 0 | 100 |

(continued)

| | Ionic soft viscous crystal | Amount (wt%) | Restraining pressure (MPa) | 1 C discharge characteristics (%) |
|---|---|---|---|---|
| Comparative Example 2 | SBPTFSI | 10.0 | 0 | 19 |

In Tables 1 and 2, SBP was 5-azoniaspiro[4,4]nonane, P11 was N,N-dimethyl-piperidinium, P12 was N-ethyl-N-methyl pyrrolidinium, TEMA was triethylmethylammonium, TPA was tetrapropylammonium, TMA was tetramethylammonium, ETMA was ethyltrimethylammonium, CFSI was 1,1,2,2,3,3-hexafluoropropane-1,3-disulfoneimide, and TFSI was bis(trifluoromethane)sulfoneimide.

<Consideration>

Referring to the results of Table 1, when a positive electrode including ionic soft viscous crystals containing CFSI as an anion was used, it was found that the capacity retention rate and 1 C discharge characteristics were significantly improved, compared to conventional ones at a sufficiently low restraining pressure such as 0.3 MPa.

This result was understood to be obtained because the soft viscous crystals suppressed delamination of the interface between the solid electrolyte and the positive electrode active material due to expansion and contraction of the positive electrode active material during the charging and discharging.

In addition, referring to the results of Table 2, even when no restraining pressure was applied, battery characteristics were improved by about twice as much as conventional ones, which exhibits significance of that the present invention toward realizing an all-solid-state rechargeable battery that can be used without applying the restraining pressure.

In addition, compared to Comparative Example 2, it was confirmed that it was important that ionic soft viscous crystals contained CFSI as an anion.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

[Description of Symbols]

1 all-solid-state rechargeable battery
10 positive electrode
11 positive electrode current collector
12 positive electrode mixture layer
20 negative electrode
21 negative current collector
22 negative electrode mixture layer
23 lithium precipitation layer
30 solid electrolyte layer

## Claims

**1.** A positive electrode for an all-solid-state rechargeable battery, comprising

a positive electrode current collector, and
a positive electrode mixture layer stacked on the positive electrode current collector,
wherein the positive electrode mixture layer comprises a positive electrode active material capable of intercalating and deintercalating lithium ions, a sulfide solid electrolyte, and an ionic soft viscous crystal including a cyclic disulfonimide-based anion.

**2.** The positive electrode as claimed in claim 1, wherein
the ionic soft viscous crystal comprises an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a combination thereof as a cation.

**3.** The positive electrode as claimed in claim 2, wherein the cation is selected from spiro-type ammonium, pyrrolidinium, piperidinium, tetraalkylammonium, or a combination thereof.

**4.** The positive electrode as claimed in claim 1, wherein

the cyclic disulfonimide-based anion is represented by Chemical Formula 1:

[Chemical Formula 1]

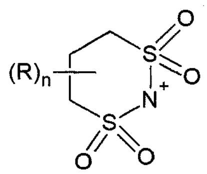

wherein, in Chemical Formula 1, R is hydrogen, a fluoro group, or a C1 to C10 fluoroalkyl group, n is an integer of 1 to 6, and at least one of the plurality of Rs is a fluoro group or a C1 to C10 fluoroalkyl group.

**5.** The positive electrode as claimed in claim 1, wherein the cyclic disulfonimide-based anion comprises a 1,1,2,2,3,3-hexafluoropropane-1,3-disulfoneimide anion.

**6.** The positive electrode as claimed in claim 1, wherein an amount of the ionic soft viscous crystal in the positive electrode mixture layer is greater than or equal to 0.05 wt% and less than or equal to 20 wt% based on 100 wt% of the positive electrode mixture layer.

**7.** The positive electrode as claimed in claim 1, wherein an amount of the ionic soft viscous crystal in the positive electrode mixture layer is greater than or equal to 0.1 wt% and less than or equal to 15 wt% based on 100 wt% of the positive electrode mixture layer.

**8.** The positive electrode as claimed in claim 1, wherein the positive electrode mixture layer further comprises a conductive auxiliary agent and a binder.

**9.** An all-solid-state rechargeable battery, comprising

a positive electrode, a negative electrode, and a solid electrolyte layer between the positive electrode and the negative electrode,
wherein the positive electrode is the positive electrode for an all-solid-state rechargeable battery as claimed in any one of claim 1 to claim 8.

**10.** The all-solid-state rechargeable battery as claimed in claim 9, wherein the negative electrode comprises at least one material selected from gold, platinum, palladium, silicon, silver, aluminum, bismuth, tin, and zinc, and amorphous carbon.

**11.** The all-solid-state rechargeable battery as claimed in claim 9, wherein the negative electrode comprises silver and amorphous carbon.

**12.** The all-solid-state rechargeable battery as claimed in claim 9, wherein a ratio of an initial charge capacity of the positive electrode to an initial charge capacity of the negative electrode satisfies Equation 1:
[Equation 1]

$$0.01<b/a<0.5 \qquad (1)$$

wherein, in Equation 1,
a is the initial charge capacity of the positive electrode (mAh), and b is the initial charge capacity of the negative electrode (mAh).

**13.** A method for charging an all-solid-state rechargeable battery, wherein the all-solid-state rechargeable battery as claimed in claim 9 is charged exceeding a charge capacity of the negative electrode.

**14.** The method as claimed in claim 13, wherein
charging is performed in a range of 2 to 100 times the charge capacity of the negative electrode.

FIG. 1

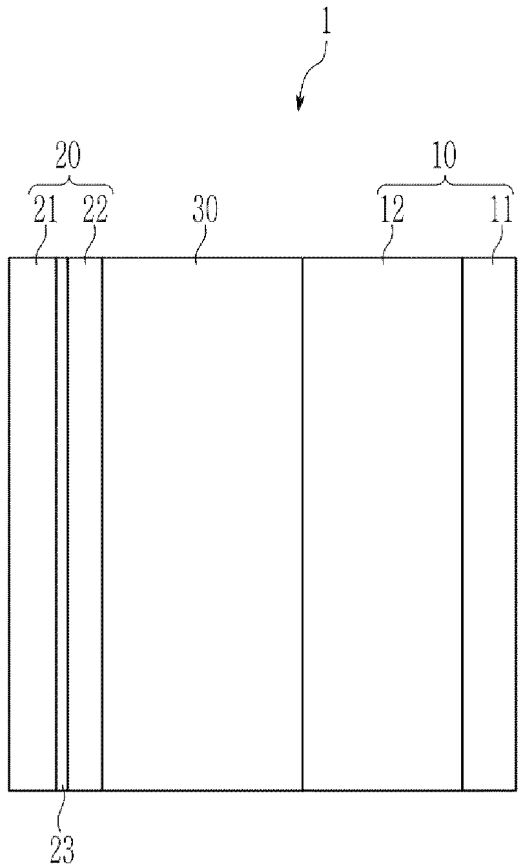

FIG. 2

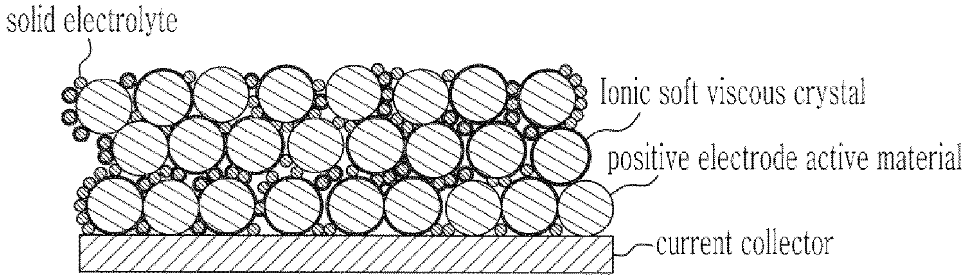
solid electrolyte
Ionic soft viscous crystal
positive electrode active material
current collector

FIG. 3A

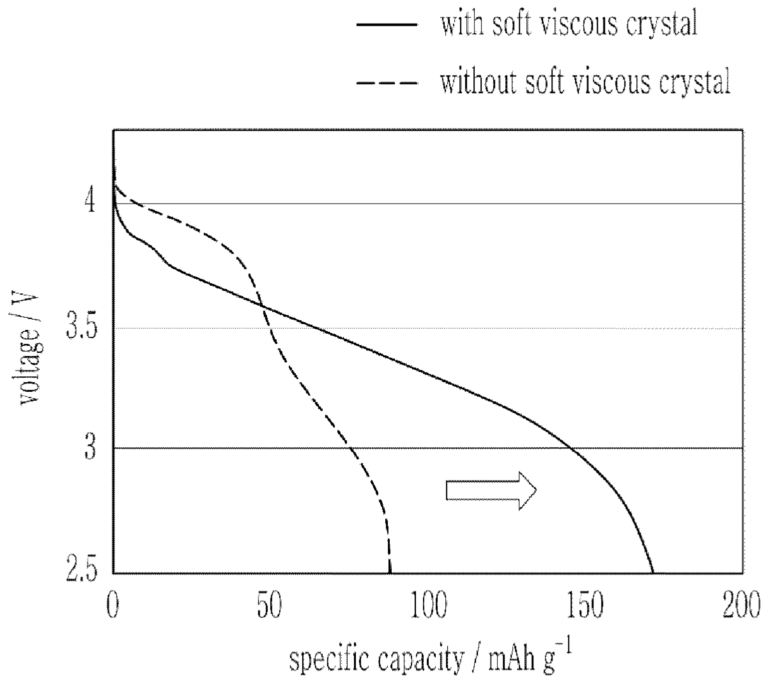
with soft viscous crystal
without soft viscous crystal
4
3.5
3
2.5
voltage / V
0
50
100
150
200
specific capacity / mAh g-1

FIG. 3B

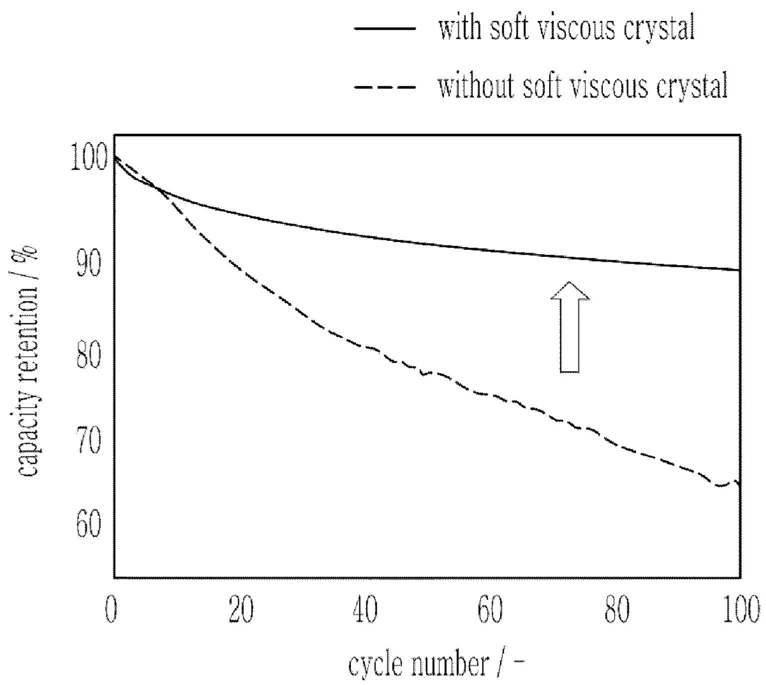
with soft viscous crystal
without soft viscous crystal
100
90
80
70
60
capacity retention / %
0
20
40
60
80
100
cycle number / -

## INTERNATIONAL SEARCH REPORT

International application No.
**PCT/KR2024/003194**

### A. CLASSIFICATION OF SUBJECT MATTER

**H01M 4/13**(2010.01)i; **H01M 10/0562**(2010.01)i; **H01M 4/62**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); C08K 5/46(2006.01); C08L 33/08(2006.01); H01B 1/06(2006.01); H01B 13/00(2006.01); H01M 10/0525(2010.01); H01M 10/0562(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 전고체 리튬 이차전지(all-solid lithium secondary battery), 고리형 디술폰이미드계 음이온(cyclic disulfonimide-based anion), 결정(crystal), 1,1,2,2,3,3-헥사플루오로프로판-1,3-디술폰이미드(1,1,2,2,3,3-hexafluoropropane-1,3-disulfonimide), 아조니아스피로[4.4]-노난(azoniaspiro[4.4]nonane)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0133066 A (SAMSUNG ELECTRONICS CO., LTD.) 04 October 2022 (2022-10-04)<br>See claim 9; paragraphs [0050], [0056]-[0070], [0079]-[0083] and [0148]; and figure 1. | 1-14 |
| Y | JP 2021-141026 A (NIPPON CHEMICON CORP.) 16 September 2021 (2021-09-16)<br>See paragraphs [0009], [0013]-[0015], [0035], [0036] and [0067]. | 1-14 |
| A | KR 10-2012-0015418 A (SAMSUNG ELECTRONICS CO., LTD.) 21 February 2012 (2012-02-21)<br>See entire document. | 1-14 |
| A | JP 2006-077107 A (JAPAN CARLIT CO., LTD.) 23 March 2006 (2006-03-23)<br>See entire document. | 1-14 |
| A | JP 2013-214510 A (NAGOYA UNIV et al.) 17 October 2013 (2013-10-17)<br>See entire document. | 1-14 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 June 2024** | **18 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/003194**

| Patent document cited in search report | | | Publication date (day/month/year) | Patent family member(s) | | | Publication date (day/month/year) |
|---|---|---|---|---|---|---|---|
| KR | 10-2022-0133066 | A | 04 October 2022 | EP | 4064406 | A1 | 28 September 2022 |
| | | | | JP | 2022-148439 | A | 06 October 2022 |
| | | | | US | 2022-0311047 | A1 | 29 September 2022 |
| JP | 2021-141026 | A | 16 September 2021 | None | | | |
| KR | 10-2012-0015418 | A | 21 February 2012 | JP | 2012-028212 | A | 09 February 2012 |
| | | | | JP | 5677779 | B2 | 25 February 2015 |
| | | | | US | 2012-0021299 | A1 | 26 January 2012 |
| JP | 2006-077107 | A | 23 March 2006 | None | | | |
| JP | 2013-214510 | A | 17 October 2013 | JP | 6150424 | B2 | 21 June 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021131979 A
- JP 2020198270 A